# EUROPÄISCHE PATENTANMELDUNG

(11) **EP 4 733 085 A1**
(43) Veröffentlichungstag der Anmeldung: **29.04.2026**
(21) Anmeldenummer: 25203879.9
(22) Anmeldetag: 23.09.2025
(51) Int. Cl.: B60C 11/03, B60C 11/12

(54) **FAHRZEUGREIFEN**

(30) Priorität: 23.10.2024 DE 102024210245
(71) Anmelder: Continental Reifen Deutschland GmbH, 30175 Hannover (DE)
(72) Erfinder: Hlubik, Marian, 020 01 Púchov (SK); Porubsky, Daniel, 020 01 Púchov (SK)
(74) Vertreter: Continental Corporation

(57) **Zusammenfassung**

Fahrzeugreifen mit einem profilierten Laufstreifen mit Profilpositiven, wie Profilblöcken(1) oder in Umfangsrichtung umlaufenden Profilrippen mit jeweils einer an der Laustreifenperipherie befindlichen Außenfläche und mit je zumindest einem, eine Tiefe von 30% bis 90% der Profiltiefe (T_{P}) aufweisenden Einschnitt (4, 4') mit zwei seine Erstreckung in Draufsicht definierenden Enden, welcher Einschnitt (4,4') entweder an beiden Enden geschlossen oder an einem Ende geschlossen ist und dabei an einer Profilpositivflanke (1a) austritt, innerhalb des Profilpositivs verlaufende Einschnittränder aufweist und mittels eines Kanals (5,5') lokal verbreitert ist, wobei der Einschnitt (4, 4') außerhalb des Kanals (5,5') eine Breite (b) von 0,40 mm bis 2,00 mm aufweist.

Der Kanal (4, 4') verläuft durchgehend entlang der im Inneren des Profilpositivs befindlichen Einschnittränder und mündet mit zumindest einem Kanalabschnitt (5a, 5'a, 5c, 5'c) an der Außenfläche des Profilpositivs nach außen.

## Beschreibung

Die Erfindung betrifft einen Fahrzeugreifen mit einem profilierten Laufstreifen mit Profilpositiven, wie Profilblöcken oder in Umfangsrichtung umlaufenden Profilrippen mit jeweils einer an der Laustreifenperipherie befindlichen Außenfläche und mit je zumindest einem, eine Tiefe von 30% bis 90% der Profiltiefe aufweisenden Einschnitt mit zwei seine Erstreckung in Draufsicht definierenden Enden, welcher Einschnitt entweder an beiden Enden geschlossen oder an einem Ende geschlossen ist und dabei an einer Profilpositivflanke austritt, innerhalb des Profilpositivs verlaufende Einschnittränder aufweist und mittels eines Kanals lokal verbreitert ist, wobei der Einschnitt außerhalb des Kanals einer Breite von 0,40 mm bis 2,00 mm aufweist.

Ein derartiger Fahrzeugreifen ist beispielsweise aus der JPH031910 A bekannt. Der Laufstreifen dieses Fahrzeugreifen weist Profilblöcke auf, die jeweils mit Einschnitten versehen sind, welche die Profilpositive durchqueren oder einerends geschlossene Einschnitte sind und zur Verbesserung der Wasseraufnahme und Wasserdrainage durch eine Anzahl von Kanälen lokal verbreitert sind, die insbesondere in radialer und/oder axialer Richtung verlaufen. Aus der WO 2015/185236 A1 ist ein Fahrzeugreifen bekannt, dessen Laufstreifen Profilpositive mit durchquerenden Einschnitten mit einem mittleren Abschnitt mit einer Tiefe von mindestens 70 % der Profiltiefe und zwei seichteren Randabschnitten unterschiedlicher Tiefen aufweisen. Innerhalb der Einschnitte vorgesehene Kanäle münden an der Profilaußenfläche nach außen und sind mit einem im Wesentlichen parallel zur Profilaußenfläche entlang des Einschnittgrunds verlaufenden Kanal verbunden, der am tieferen Randabschnitt des Einschnitts in eine Umfangsnut mündet. Ein Fahrzeugreifen mit derart ausgeführten Einschnitten ist vor allem für den Einsatz unter winterlichen Fahrbedingungen, beispielsweise auf mit Eis bedeckten Fahrbahnen, vorgesehen, wobei die Einschnitte dafür sorgen sollen, den sich auf Eis beim Abrollen des Reifens bildenden Schmelzwasserfilm über die Kanäle nach außen abzuleiten. Aus der WO 2015/128106 A1 ist ein Fahrzeugreifen bekannt, welcher im Laufstreifen Profilpositive, beispielsweise Profilblöcke oder Profilrippen, aufweist, welche von Einschnitten durchquert sind, die von Einschnittwänden begrenzt sind, wobei im Einschnittinneren an zumindest einer der Einschnittwände eine Vertiefung ausgebildet ist, die das Wasseraufnahmevermögen des Einschnitts erhöht.

Insbesondere in Laufstreifen von Nutzfahrzeugreifen ist es bekannt und üblich, in den Profilpositiven des Laufstreifens Einschnitte auszubilden, die an einem Ende oder an beiden Enden geschlossen sind, für zusätzliche Griffkanten zur Verbesserung der Traktionsperformance beim Abrollen des Reifens sorgen und für die Steifigkeit der Profilpositive von Vorteil sind. Durch ihre eher geringe Breite und die geschlossenen Enden neigen die Einschnitte beim Abrollen des Reifens am Untergrund, im Footprint, verstärkt dazu, sich zu schließen, sodass ihr Wasserableitvermögen bzw. ihr Wasseraufnahmevermögen auf nassem Untergrund eingeschränkt ist.

Der Erfindung liegt die Aufgabe zugrunde, bei einem Fahrzeugreifen der eingangs genannten Art, also bei Fahrzeugreifen mit Profilpositiven im Laufstreifen, die mit an einem Ende oder an beiden Enden geschlossenen Einschnitten versehen sind, die Nässeperformance und damit auch die Aquaplaning-Performance zu verbessern.

Gelöst wird die gestellte Aufgabe erfindungsgemäß dadurch, dass der Kanal durchgehend entlang der im Inneren des Profilpositivs befindlichen Einschnittränder verläuft und mit zumindest einem Kanalabschnitt an der Außenfläche des Profilpositivs nach außen mündet.

Durch die Erfindung wird in den Einschnitten zusätzlicher Raum zur Aufnahme von Wasser beim Fahren auf Nässe zur Verfügung gestellt, wodurch die Nässeperformance und die Aquaplaning-Performance des Fahrzeugreifens verbessert sind, ohne die Stabilität der Profilpositive zu beeinträchtigen.

Gemäß einer bevorzugten Ausführung ist der Kanal jeweils der einzige beim jeweiligen Einschnitt ausgebildete Kanal, weitere zusätzliche Kanäle sind nicht erforderlich und würden zudem eine komplexere Ausgestaltung der den Einschnitt ausbildenden Lamelle für die Vulkanisationsform erforderlich machen.

Bei einer weiteren bevorzugten Ausführung, bei welcher Profilpositive, beispielsweise Profilblöcke, mit zumindest einem an beiden Enden geschlossenen Einschnitt vorgesehen sind, tritt der Kanal an beiden geschlossenen Enden des Einschnitts nach außen. Diese Ausführung begünstigt die Aufnahme von Wasser beim Abrollen des Reifens am Untergrund.

Bei dieser Ausführung ist es für ein größeres Volumen des Kanals von Vorteil, wenn der Einschnitt von U-förmig verlaufenden Einschnitträndern umlaufen ist, entlang welchen der Kanal ausgebildet ist.

Für eine gute Wasseraufnahme ist ferner vorteilhaft, wenn der Kanal einen kreisförmigen Querschnitt aufweist, dessen Durchmesser das 1,2-fache bzw. 3-fache der Einschnittbreite beträgt.

Bei einer weiteren vorteilhaften Ausführung weist der Kanal einen elliptischen oder einen ovalen Querschnitt auf, wobei der Kanal entlang seiner größten Querschnitt-Erstreckung einen Durchmesser aufweist, der das 1,2-fache bis 3-fache der Einschnittbreite beträgt und senkrecht dazu eine geringere Breite aufweist, die zumindest der Einschnittbreite entspricht. Kanäle mit ovalem oder elliptischem Querschnitt können vor allem dann von Vorteil sein, wenn der Einschnitt zur axialen Richtung unter einem Winkel, beispielsweise einem Winkel von bis zu 45°, verläuft.

Eine besonders gute Aufnahme von Wasser in das Kanalinnere wird dann unterstützt, wenn der Kanal an der Außenfläche des Profilpositivs mit zumindest einem sich gegenüber dem anschließenden Kanalabschnitt nach außen trichterartig verbreiternden Endabschnitt nach außen mündet.

Besonders vorteilhaft ist eine Ausführung des sich nach außen trichterartig verbreiternden Endabschnitts mit kreisförmigen Querschnittsflächen, insbesondere wenn die weiteren Kanalabschnitte ebenfalls kreisförmige Querschnittsflächen aufweisen, wobei der Endabschnitt an der Außenfläche des Profilpositivs einen Durchmesser aufweist, welcher das 1,2-fache bis 3-fache des Durchmessers des unmittelbar anschließenden Kanalabschnitts beträgt.

Vorzugsweise wird der sich nach außen trichterartig verbreiternde Endabschnitt auch an einen Kanal mit einer elliptischen oder ovalen Querschnittsfläche angepasst, indem dieser Endabschnitt ebenfalls elliptische oder ovale Querschnittsflächen aufweist und dabei an der Außenfläche des Profilpositivs entlang seiner größten Querschnitts-Erstreckung einen Durchmesser aufweist, welcher das 1,2-fache bis 3-fache der größten Querschnitts-Erstreckung des unmittelbar anschließenden Kanalabschnitts beträgt.

Besonders vorteilhaft für die Aufnahme von Wasser in das Kanalinnere ist es, wenn der sich nach außen trichterartig verbreiternde Endabschnitt eine radiale Erstreckung von 1,50 mm bis 5,00 mm aufweist.

Für eine optimale Nässeperformance des Fahrzeugreifens ist es ferner bevorzugt, wenn der Laufstreifen Profilpositive, wie Profilblöcke oder in Umfangsrichtung umlaufende Profilrippen, aufweist, die jeweils mit mehreren Einschnitten versehen sind. Diese Einschnitte können die üblichen gegenseitigen Abstände aufweisen.

Weitere Merkmale, Vorteile und Einzelheiten der Erfindung werden nun anhand der Zeichnung, die Ausführungsbeispiele darstellt, näher beschrieben. Dabei zeigen
Fig. 1 einen Ausschnitt eines Laufstreifens eines Fahrzeugreifens, wobei Profilblöcke mit jeweils einem Einschnitt dargestellt sind,
Fig. 2 eine Ansicht eines einzelnen Profilblocks aus Fig. 1,
Fig. 3 eine Ansicht des Abzugskörpers des Einschnitts aus Fig. 2 und
Fig. 4 mit Fig. 5, Fig. 6 mit Fig. 7 und Fig. 8 mit Fig. 9 weitere Ausführungsvarianten in zu Fig. 2 und Fig. 3 analogen Darstellungen.

Fahrzeugreifen gemäß der Erfindung sind Reifen für Kraftfahrzeuge, insbesondere für mehrspurige Kraftfahrzeuge, wie Personenkraftwagen (PKW), Vans (Transporter oder SUVs) oder für Nutzfahrzeuge (LKW)., Die Reifen sind insbesondere Fahrzeugluftreifen, besonders bevorzugt Fahrzeugluftreifen in Radialbauart, sowie runderneuerte Nutzfahrzeugreifen.

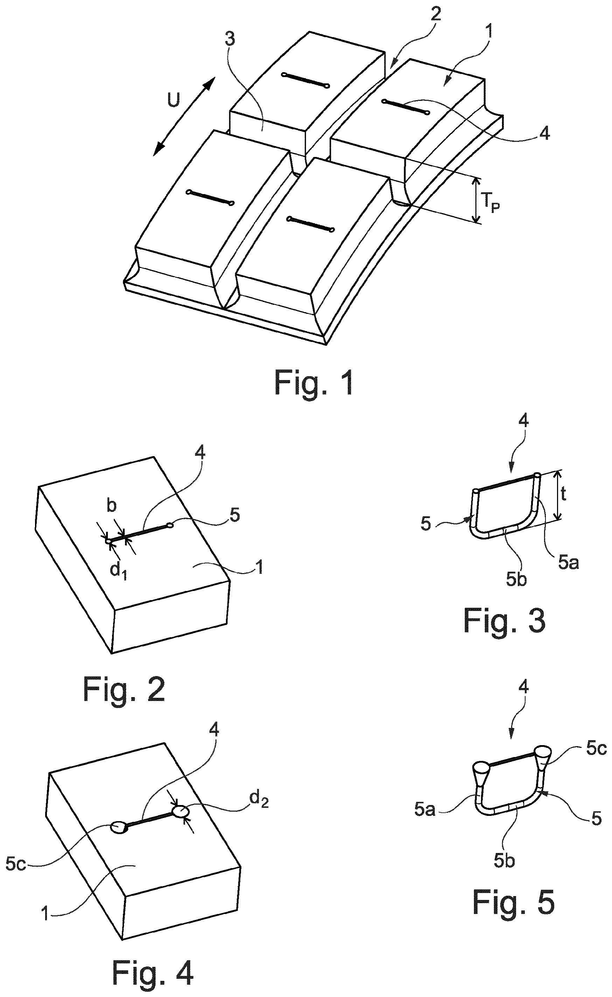

Fig. 1 zeigt beispielhaft Ansichten von Profilblöcken 1 eines Laufstreifens eines Fahrzeugreifens, beispielsweise eines Nutzfahrzeugreifens. Der Laufstreifen kann beispielsweise auch ein Laufstreifen eines runderneuerten Nutzfahrzeugreifens sein. Wie bekannt sind runderneuerte Fahrzeugreifen kostengünstiger herstellbar als Neureifen und es werden daher insbesondre Nutzfahrzeugreifen runderneuert. Beispielsweise wird bei einer Kaltrunderneuerung der abgefahrene Laufstreifen entfernt und es wird eine Bindegummischicht auf die Reifenkarkasse aufgebracht, auf welche ein neuer profiliertes Laufstreifen aufgelegt und durch Vulkanisieren der Bindegummischicht mit der Reifenkarkasse verbunden wird.

Die in Fig. 1 schematisch dargestellten Profilblöcke 1 gehören zu zwei in Umfangsrichtung, welche durch den Doppelpfeil U angedeutet ist, verlaufenden Blockreihen, welche durch eine Umfangsnut 2 voneinander getrennt sind und jeweils von weiteren, nicht näher bezeichneten Umfangsnuten begrenzt sind. Die Umfangsnuten 2 sind jene Nuten, die die vorgesehene maximale Profiltiefe T_{P} aufweisen. Innerhalb einer Blockreihe sind die Profilblöcke 1 voneinander durch Quernuten 3 getrennt. Jeder Profilblock 1 ist mit einem Einschnitt 4 versehen, welcher ein geschlossener Einschnitt ist, also ein Einschnitt, der innerhalb des Profilblocks 1 endet bzw. zur Gänze innerhalb des Profilblocks 1 verläuft und in keine Nut mündet. Bei der dargestellten Ausführungsform verlaufen die Einschnitte 4 gerade und jeweils parallel zu den Quernuten 3.

Bei alternativen Ausführungsformen sind in den Profilblöcken 1 jeweils mehrere Einschnitte 4 vorhanden, die, gegebenenfalls abgestimmt auf die jeweilige äußere Form der Profilblöcke 1, unter einem Winkel zu den Quernuten 3 und gegebenenfalls auch nicht parallel zueinander verlaufen, wobei ihre Erstreckungsrichtung insbesondere um bis zu 45° von der axialen Richtung des Laufstreifens abweicht. Darüber hinaus können die Einschnitte 4 in Draufsicht wellen-, zickzackförmig und dergleichen verlaufen. Die Einschnitte 4 reichen bis in eine Tiefe t (Fig. 3), die 30 % bis 90 % der vorgesehenen Profiltiefe T_{P} der Profilierung des jeweiligen Laufstreifens beträgt.

Wie Fig. 3 und Fig. 5 zeigen ist der Einschnitt 4 ist im Inneren des Profilblocks 1 von im Beispiel U-förmig verlaufenden Einschnitträndern begrenzt bzw. umlaufen, wobei entlang der Einschnittränder durchgehend ein Kanal 5 verläuft. Die Einschnitte 4 weisen in ihrem Bereich innerhalb des Kanals 5 eine insbesondere konstante Breite b (Fig. 2) auf, die üblicherweise 0,40 mm bis 2,00 mm, insbesondere bis zu 1,00 mm, beträgt. Der Kanal 5 weist bei dem in Fig. 2 und Fig. 3 gezeigten Ausführungsbeispiel einen insbesondere konstanten kreisförmigen Querschnitt mit einem Durchmesser aufweist, welcher 1,2-Fache bis 3-Fache der Einschnittbreite b des Einschnitts 4 beträgt. Alternativ ist der Querschnitt des Kanals 5 elliptisch oder oval, wobei der Kanal 5 entlang seiner größten Erstreckung einen Durchmesser aufweist, welcher 1,2-Fache bis 3-Fache der Einschnittbreite b beträgt und senkrecht zu seiner größten Erstreckung eine geringere Breite aufweist, die jedoch zumindest der Einschnittbreite b entspricht. Der Kanal 5 verläuft von der Außenfläche (an der Laufstreifenperipherie) des Profilblocks 1 ausgehend bei den beiden Enden des Einschnitts 4 beginnend mit Kanalabschnitten 5a in das Innere des Profilblocks 1 und dann nach gerundeten Übergangsabschnitten mit einem Kanalabschnitt 5b ohne Unterbrechung entlang des Einschnittgrunds.

Die in Fig. 4 und Fig. 5 gezeigte Ausführungsform unterscheidet sich von jener gemäß Fig. 2 und Fig. 3 dadurch, dass die Kanalabschnitte 5a mit sich in Richtung zur Außenfläche des Profilblocks 1 trichterartig verbreiternden Endabschnitten 5c an der Profilblockaußenfläche nach außen treten. Die sich trichterartig verbreiternden Endabschnitte 5c weisen bei einem Kanal mit kreisförmigem Querschnitt kreisförmige Querschnittsflächen auf, deren Durchmesser d₂ an der Außenfläche des Profilblocks 1 das 1,2-Fache bis 3-Fache des Durchmessers d₁ des unmittelbar anschließenden Kanalabschnitts 5a beträgt. Alternativ weisen die sich trichterartig verbreiternden Endabschnitte 5c bei elliptischen oder ovalen Kanalquerschnitten angepasste elliptische oder ovale Querschnittsflächen auf, welche in Richtung zur Außenfläche des Profilblocks 1 zunehmend größer werden. An der Außenfläche weisen die sich trichterartig verbreiternden Endabschnitte 5c entlang ihrer größten Erstreckung einen Durchmesser auf, welcher 1,2-Fache bis 3-Fache der größten Erstreckung des unmittelbar anschließenden Kanalabschnitts beträgt. Die radiale Erstreckung der sich trichterartig verbreiternden Endabschnitte 5c beträgt 1,50 mm bis 5,00 mm.

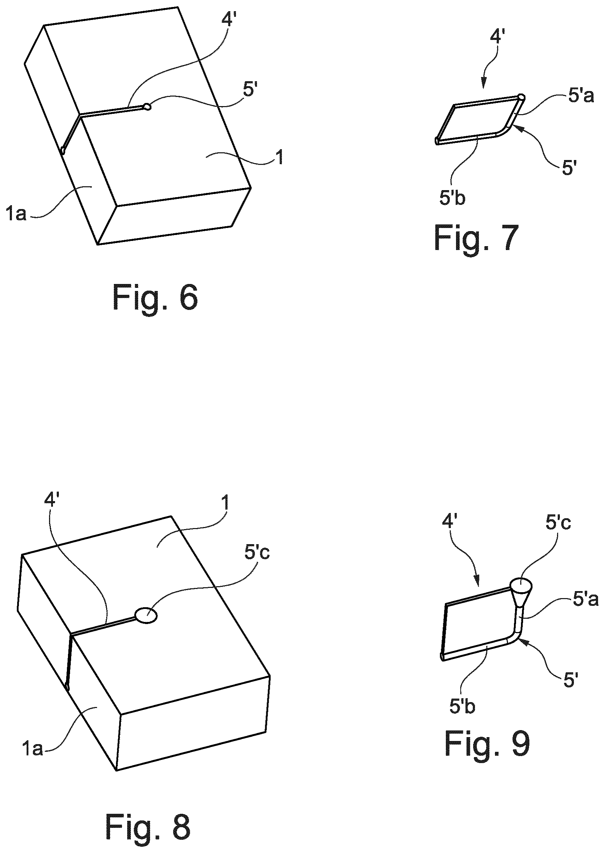

Bei den in Fig. 6 mit Fig. 7 sowie in Fig. 8 mit Fig. 9 dargestellten Ausführungsvarianten ist im jeweils dargestellten Profilblock 1 je ein beim gezeigten Beispiel L-förmig verlaufender Einschnitt 4' ausgebildet, welcher ein einseitig geschlossener Einschnitt ist. Der Einschnitt 4' endet innerhalb des Profilblocks 1 und mündet an einer seitlichen Profilblockflanke 1a nach außen. Bei den dargestellten Ausführungsbeispielen reichen die Einschnitte 4' bis in den mittleren Bereich des jeweiligen Profilblocks 1, können jedoch weiter oder weniger weit in den Profilblock 1 hineinragen. Die Einschnitte 4' weisen die bereits erwähnte Breite b auf und sind bei den dargestellten Ausführungsbeispielen in Draufsicht gerade verlaufende Einschnitte. Entlang der im Inneren des Profilblocks 1 befindlichen Einschnittränder der Einschnitte 4' verläuft an der Außenfläche des Profilblocks 1 beginnend durchgehend ein Kanal 5' mit einem Kanalabschnitt 5'a vorerst in das Innere des Profilblocks 1 und nach einem gerundeten Übergangsabschnitt mit einem Kanalabschnitt 5'b bis zur Profilblockflanke 1a und tritt an dieser nach außen, beispielsweise in eine Umfangsnut.

Bei der in Fig. 8 und 9 gezeigten Ausführungsvariante mündet der Kanal 5' mit einem sich trichterartig verbreiternden Endabschnitt 5'c, analog zur Ausführungsvariante gemäß Fig. 4 und 5, an der Außenfläche des Profilblocks 1 nach außen. Für den sich trichterartig verbreiternden Endabschnitt 5'c gelten die bereits erwähnten Dimensionsangaben.

Die Kanäle 5, 5' stellen zusätzliche Hohlräume zur Aufnahme von Wasser beim Fahren auf Nässe zur Verfügung. Besonders positiv wirken sich diese Kanäle 5, 5' daher auf die Nässeperformance, die Aquaplaning-Performance, aber auch auf die Stabilität der diese Einschnitte ausformenden Lamellen in einer Vulkanisationsform aus. Von besonderem Vorteil sind die Kanäle 5, 5' beim Fahren auf nassem Untergrund sowohl bei Bremsbelastungen als auch bei Traktionsbelastungen.

### Bezugszeichenliste

- 1: Profilblock
- 1a: Flanke
- 2: Umfangsnut
- 3: Quernut
- 4, 4': Einschnitt
- 5, 5': Kanal
- 5a, 5b: Kanalabschnitt
- 5a', 5b': Kanalabschnitt
- 5c, 5'c: sich trichterartig verbreiternder Endabschnitt
- b: Breite
- d₁, d₂: Durchmesser
- U: Umfangsrichtung
- Tp: Profiltiefe
- T: Tiefe

## Patentansprüche

1. Fahrzeugreifen mit einem profilierten Laufstreifen mit Profilpositiven, wie Profilblöcken(1) oder in Umfangsrichtung umlaufenden Profilrippen mit jeweils einer an der Laustreifenperipherie befindlichen Außenfläche und mit je zumindest einem, eine Tiefe von 30% bis 90% der Profiltiefe (T_{P}) aufweisenden Einschnitt (4, 4') mit zwei seine Erstreckung in Draufsicht definierenden Enden, welcher Einschnitt (4,4') entweder an beiden Enden geschlossen oder an einem Ende geschlossen ist und dabei an einer Profilpositivflanke (1a) austritt, innerhalb des Profilpositivs verlaufende Einschnittränder aufweist und mittels eines Kanals (5,5') lokal verbreitert ist, wobei der Einschnitt (4, 4') außerhalb des Kanals (5,5') eine Breite (b) von 0,40 mm bis 2,00 mm aufweist,
**dadurch gekennzeichnet,**
**dass** der Kanal (4, 4') durchgehend entlang der im Inneren des Profilpositivs befindlichen Einschnittränder verläuft und mit zumindest einem Kanalabschnitt (5a, 5'a, 5c, 5'c) an der Außenfläche des Profilpositivs nach außen mündet.

2. Fahrzeugreifen nach Anspruch 1, **dadurch gekennzeichnet, dass** der Kanal (5, 5') der einzige beim Einschnitt (4, 4') ausgebildete Kanal ist.

3. Fahrzeugreifen nach Anspruch 1 oder 2, mit Profilpositiven mit zumindest einem an beiden Enden geschlossenen Einschnitt (4), **dadurch gekennzeichnet, dass** der Kanal (5) an beiden geschlossenen Enden des Einschnitts (4) nach außen tritt.

4. Fahrzeugreifen nach einem der Ansprüche 1 bis 3, mit Profilpositiven mit zumindest einem an beiden Enden geschlossenen Einschnitt, **dadurch gekennzeichnet, dass** der Einschnitt (4) von U-förmig verlaufenden Einschnitträndern umlaufen ist.

5. Fahrzeugreifen nach einem der Ansprüche 1 bis 4, **dadurch gekennzeichnet, dass** der Kanal (5, 5') einen kreisförmigen Querschnitt aufweist, dessen Durchmesser das 1,2-Fache bis 3-Fache der Einschnittbreite (b) beträgt.

6. Fahrzeugreifen nach einem der Ansprüche 1 bis 5, **dadurch gekennzeichnet, dass** der Kanal (5, 5') einen elliptischen oder einen ovalen Querschnitt aufweist, wobei der Kanal (5, 5') entlang seiner größten Querschnitts-Erstreckung einen Durchmesser aufweist, welcher 1,2-Fache bis 3-Fache der Einschnittbreite (b) beträgt und senkrecht zu seiner größten Erstreckung eine geringere Breite aufweist, die zumindest der Einschnittbreite (b) entspricht.

7. Fahrzeugreifen nach einem der Ansprüche 1 bis 6, **dadurch gekennzeichnet, dass** der Kanal (5, 5') an der Außenfläche des Profilpositivs mit zumindest einem sich gegenüber dem anschließenden Kanalabschnitt (5a, 5'a) nach außen trichterartig verbreiternden Endabschnitt (5c, 5'c) nach außen mündet.

8. Fahrzeugreifen nach Anspruch 5 oder 7, **dadurch gekennzeichnet, dass** der sich nach außen trichterartig verbreiternde Endabschnitt (5c, 5'c) kreisförmige Querschnittsflächen aufweist, wobei der Endabschnitt (5c, 5'c) an der Außenfläche des Profilpositivs einen Durchmesser (d₂) aufweist, welcher das 1,2-Fache bis 3-Fache des Durchmessers (d₁) des unmittelbar anschließenden Kanalabschnitts (5a) beträgt.

9. Fahrzeugreifen nach Anspruch 6 oder 7, **dadurch gekennzeichnet, dass** der sich nach außen trichterartig verbreiternde Endabschnitt (5c, 5'c) elliptische oder ovale Querschnittsflächen aufweist, wobei der Endabschnitt (5c, 5'c) an der Außenfläche des Profilpositivs entlang seiner größten Querschnitts-Erstreckung einen Durchmesser aufweist, welcher 1,2-Fache bis 3-Fache der größten Querschnitts-Erstreckung des unmittelbar anschließenden Kanalabschnitts (5a) beträgt.

10. Fahrzeugreifen nach einem der Ansprüche 7 bis 9, **dadurch gekennzeichnet, dass** der sich nach außen trichterartig verbreiternde Endabschnitt (5c, 5'c) eine radiale Erstreckung von 1,50 mm bis 5,00 mm aufweist.

11. Fahrzeugreifen nach einem der Ansprüche 1 bis 10, **dadurch gekennzeichnet, dass** der Laufstreifen Profilpositive, wie Profilblöcke (1) oder in Umfangsrichtung umlaufenden Profilrippen aufweist, die jeweils mit mehreren Einschnitten (4, 4') versehen sind.
